# EUROPÄISCHE PATENTSCHRIFT

(11) **EP 2 710 441 B1**
(45) Veröffentlichungstag und Bekanntmachung des Hinweises auf die Patenterteilung: **24.04.2019**
(21) Anmeldenummer: 12711782.8
(22) Anmeldetag: 23.03.2012
(51) Int. Cl.: G05D 7/01, B05B 1/30, B05B 12/08

(54) **DURCHFLUSSMENGENREGLER**
FLOW RATE REGULATOR
RÉGULATEUR DE DÉBIT

(30) Priorität: 17.05.2011 DE 202011100800 U
(43) Veröffentlichungstag der Anmeldung: 26.03.2014
(73) Patentinhaber: Neoperl GmbH, 79379 Müllheim (DE)
(72) Erfinder: TWITCHETT, Simon, Hartlebury Kidderminster DY11 7XF (GB)
(74) Vertreter: Börjes-Pestalozza, Henrich
(86) Internationale Anmeldenummer: PCT/EP2012/001286
(87) Internationale Veröffentlichungsnummer: WO 2012/156002

(56) Entgegenhaltungen:
- WO-A1-2004/003673
- DE-A1- 2 131 117
- FR-A- 1 175 236
- FR-A1- 2 507 795
- US-A1- 2006 169 330

## Beschreibung

Die Erfindung betrifft einen Durchflussmengenregler mit einem Gehäuse, das zumindest einen Regler-Ringkanal aufweist, in dem ein ringförmiger Drosselkörper aus elastischem Material vorgesehen ist, der zwischen sich und einer, eine Regelprofilierung tragenden Kanalwandung einen Steuerspalt begrenzt, dessen Durchtrittsquerschnitt durch den sich unter der beim Durchströmen bildenden Druckdifferenz verformenden Drosselkörper veränderbar ist, sowie mit zumindest einem Ventil, das einen Ventilkörper hat, der sich unter dem Druck des durchströmenden Mediums von einer Offenstellung gegen eine Rückstellkraft in eine Schließstellung bewegt, in welcher Schließstellung der Ventilkörper wenigstens eine Ventilöffnung verschließt.

Aus der FR 1 175 236 A ist bereits ein Durchflussmengenregler vorbekannt, der mit seinem scheibenförmigen Reglergehäuse zwischen zwei benachbarte Leitungsabschnitte einer Rohrleitung zwischengeschaltet werden kann. Der vorbekannte Mengenregler hat dazu mehrere Durchflussöffnungen, von denen zumindest eine Durchflussöffnung einen konstanten lichten Querschnitt aufweist, während in wenigstens einer anderen Durchflussöffnung ein, den Durchflussquerschnitt umgrenzender Regelkörper aus elastischem Material vorgesehen ist, der sich unter dem Druck des durchströmenden Fluids zunehmend verengt. Während die Durchflussleistung der einen konstanten Querschnitt aufweisenden Durchflussöffnungen mit steigendem Druck zunimmt, fällt die Durchflussleistung der den elastischen Regelkörper aufweisenden Durchflussöffnungen mit steigendem Druck des durchströmenden Fluids ab, so dass sich in der Summe eine anfänglich mit steigendem Druck stark ansteigende Durchflussleistung ergibt, die anschließend bei weiter steigendem Druck nur noch langsamer ansteigt. Dieser vorbekannte Durchflussmengenregler weist jedoch keinerlei Ventile auf, die sich unter dem Druck des durchströmenden Fluids von einer Offenstellung gegen eine Rückstellkraft in irgendeine Schließstellung bewegen könnten.

Aus der WO 2004/003673 A1 kennt man bereits einen Durchflussmengenregler, der in seinem Reglergehäuse zwei konzentrisch zueinander angeordnete Regler-Einheiten aufweist, von denen eine jede Regler-Einheit in einem umlaufenden Durchtrittskanal einen Steuerzapfen oder Regelkern hat, den jeweils ein ringförmiger Drosselkörper aus elastischem Material umgreift, der zwischen sich und dem Steuerzapfen und/oder dem Gehäuse-Innenumfang einen Steuerspalt begrenzt, dessen Durchtrittsquerschnitt durch den sich unter der beim Durchströmen bildenden Druckdifferenz verformenden Drosselkörper veränderbar ist. Dabei ist eine innere Regler-Einheit im Steuerzapfen oder Regelkern der zweiten äußeren Regler-Einheit angeordnet. Während mit der äußeren, vergleichsweise großen Regler-Einheit auch hohe Literleistungen pro Zeiteinheit eingeregelt werden können, ist mit der demgegenüber kleineren inneren Regler-Einheit eine Feindosierung der durchströmenden Wassermenge möglich. Keiner der im vorbekannten Durchflussmengenregler gemäß der WO 2004/003673 A1 vorgesehenen und im Wesentlichen baugleichen Regler-Einheiten stellt ein Ventil dar, das unter dem Druck des durchströmenden Wassers zwischen einer Offenstellung und einer Schließstellung bewegbar wäre.

Aus Fig. 6 der DE-OS 21 31 117 ist bereits ein Durchflussmengenregler der eingangs erwähnten Art bekannt. Der vorbekannte Durchflussmengenregler weist ein Reglergehäuse auf, das einen Regler-Ringkanal hat, in dem ein ringförmiger Drosselkörper aus elastischem Material vorgesehen ist, der zwischen sich und der inneren, eine Regelprofilierung tragenden Kanalwandung einen Steuerspalt begrenzt, dessen Durchtrittsquerschnitt durch den sich unter der beim Durchströmen bildenden Druckdifferenz verformenden Drosselkörper veränderbar ist. Mit zunehmendem Druck verformt sich der aus elastischem Material bestehende Drosselkörper in die Regelprofilierung, so dass sich der Durchtrittsquerschnitt des Steuerspalts zunehmend verengt, derart, dass die maximale Durchflussleistung druckunabhängig auf einen festgelegten Wert begrenzt ist. In dem vom Regler-Ringkanal umgrenzten Zentrum des Reglergehäuses ist ein

Einlaufventil vorgesehen, das einen Ventilkörper hat, der sich unter der beim Druck des durchströmenden Mediums von einer Offenstellung gegen eine Rückstellkraft in axialer Richtung in eine Schließstellung bewegt, in welcher Schließstellung der Ventilkörper wenigstens eine Ventilöffnung verschließt. Das zusätzliche Einlaufventil hat die Aufgabe, bei niedrigem Anschlussdruck einen zusätzlichen Flüssigkeitsdurchgang zu schaffen, der bei steigendem Druck ein rasches Ansteigen der Durchflussleistung bis zum angestrebten Maximalwert sicherstellt.

Da die axiale Stellbewegung des im Einlaufventil vorgesehenen Ventilkörpers eine gewisse Einbauhöhe erfordert, ist der vorbekannte Durchflussmengenregler vergleichsweise hoch. Damit die Ventilöffnung des im Zentrum des Reglergehäuses vorgesehenen Einlaufventils einen ausreichend großen Durchflussquerschnitt hat, weist das Reglergehäuse einen entsprechend großen Gehäusequerschnitt auf. Der aus DE-OS 21 31 117 vorbekannte Durchflussmengenregler ist daher vergleichsweise voluminös und lässt sich unter beengten Platzverhältnissen, beispielsweise im Wasserauslauf einer schmalen sanitären Auslaufarmatur, nicht einsetzen. Darüber hinaus ist der vorbekannte Durchflussmengenregler vergleichsweise komplex und aufwändig in der Herstellung.

Es besteht daher insbesondere die Aufgabe, einen kostengünstig herstellbaren Durchflussmengenregler der eingangs erwähnten Art zu schaffen, der leistungsfähig und dennoch kompakt ausgestaltet werden kann.

Die erfindungsgemäße Lösung dieser Aufgabe besteht bei dem Durchflussmengenregler der eingangs erwähnten Art insbesondere darin, dass der Ventilkörper in einem Ventil-Ringkanal des Reglergehäuses vorgesehen ist, welcher Ventil-Ringkanal an seinem Kanalgrund wenigstens eine Ventilöffnung aufweist, dass der Ventilkörper ringförmig ausgestaltet und aus elastischem Material hergestellt ist, dass der ringförmige Ventilkörper sich unter dem Druck des anströmenden Mediums derart verformt, dass der Ventilkörper sich von der Offenstellung gegen die Rückstellkraft der Eigenelastizität des für den Ventilkörper verwendeten elastischen Materials in die Schließstellung bewegt, in welcher der elastische Ventilkörper die wenigstens eine Ventilöffnung dicht verschließt, so dass ab einem bestimmten Druck des anströmenden Fluids kein weiteres, durch das Ventil durchströmendes Fluid-Volumen zur erwarten ist, und dass sich der in Abhängigkeit vom Druck des anströmenden Fluids dargestellte Kurvenverlauf des pro Zeiteinheit durch den zumindest einen Regler-Ringkanal durchströmenden Durchflussvolumens und der Kurvenverlauf des durch die wenigstens eine Ventilöffnung strömenden zusätzlichen Volumens sich somit derart addieren, dass der Durchflussmengenregler bereits bei geringen Drücken des anströmenden Fluids seinen angestrebten Maximalwert der Durchflussleistung erreicht und einhält.

Der erfindungsgemäße Durchflussmengenregler weist zumindest ein Einlaufventil auf, dessen Ventilkörper in einem Ventil-Ringkanal des Reglergehäuses vorgesehen ist, welcher Ventil-Ringkanal an seinem Kanalgrund wenigstens eine Ventilöffnung aufweist. Durch die ringförmige und an den Regler-Ringkanal angepasste Formgebung kann die zumindest eine Ventilöffnung des Ventils einen vergleichsweise großen Öffnungsquerschnitt aufweisen. Der Ventilkörper ist ringförmig ausgestaltet und kann aus elastischem Material kostengünstig hergestellt werden. Da der Ventilkörper nicht beispielsweise in axialer Richtung verschieblich geführt werden muss, sondern sich unter dem Druck des anströmenden Mediums derart verformt, dass der Ventilkörper sich von der Offenstellung gegen die Rückstellkraft der Eigenelastizität des für ihn verwendeten elastischen Materials in die Schließstellung bewegt, ist das erfindungsgemäß verwendete Ventil auch störunanfällig und wartungsarm. Da der Ventilkörper nicht beispielsweise in axialer Richtung verschieblich geführt werden muss, und da durch die ringförmige und an den Regler-Ringkanal angepasste Formgebung die Ventilöffnung platzsparend und dennoch mit einer vergleichsweise großen lichten Öffnungsfläche ausgestaltet werden kann, kann der erfindungsgemäße Durchflussmengenregler leistungsfähig und kompakt ausgestaltet werden.

Die leistungsfähige und platzsparende Ausgestaltung des erfindungsgemäßen Durchflussmengenreglers wird noch begünstigt, wenn der zumindest eine Ventil-Ringkanal und der wenigstens eine Regler-Ringkanal konzentrisch zueinander angeordnet sind.

Um bei zunehmendem Druck des anströmenden Mediums den angestrebten Maximalwert der Durchflussleistung möglichst rasch erreichen zu können, ist es vorteilhaft, wenn zumindest ein Ventil-Ringkanal in Bezug auf einen Regler-Ringkanal außenliegend angeordnet ist.

Eine bevorzugte Ausführungsform gemäß der Erfindung, die sich durch gleichbleibend gute Regler-Eigenschaften auszeichnet, sieht vor, dass die Regel-Profilierung durch vorzugsweise in Durchströmrichtung orientierte Ein- und Ausformungen der Kanalwandung gebildet ist.

Dabei kann es zweckmäßig sein, wenn die Regelprofilierung an einer inneren und/oder vorzugsweise einer äußeren Kanalwandung des zumindest einen Regler-Ringkanals vorgesehen ist. Eine bevorzugte Ausführungsform gemäß der Erfindung sieht vor, dass die Regelprofilierung an einer äußeren Kanalwandung des zumindest einen Regler-Ringkanals angeordnet ist.

Um ein Aufschwimmen der aus vergleichsweise leichtem elastischen Material hergestellten Ventil- und Drosselkörper zu verhindern und um die Anordnung des Drosselkörpers bzw. des Ventilkörpers in dem zugeordneten Ringkanal sicherzustellen, sieht eine bevorzugte Weiterbildung gemäß der Erfindung vor, dass der Drosselkörper im Regler-Ringkanal und/oder der Ventilkörper im Ventil-Ringkanal beidseits in axialer Richtung gesichert ist.

Dabei wird ein Aufschwimmen von Drosselkörper bzw. Ventilkörper mit Sicherheit verhindert, wenn die als Einsetzöffnung für Drossel- bzw. Ventilkörper dienende Zuströmseite von Regler-Ringkanal und/oder Ventil-Ringkanal mittels wenigstens einem vorzugsweise kreuzförmigen Sicherungselement sicherbar ist.

Um den Drosselkörper bzw. den Ventilkörper in dem zugeordneten Ringkanal einlegen und dort anschließend sichern zu können, ist es zweckmäßig, wenn das wenigstens eine Sicherungselement am Reglergehäuse lösbar und vorzugsweise lösbar verrastbar gehalten ist.

Weiterbildungen gemäß der Erfindung ergeben sich aus den Ansprüchen in Verbindung mit der Beschreibung und den Figuren. Nachstehend wird die Erfindung anhand bevorzugter Ausführungsbeispiele noch näher beschrieben.

Es zeigt:
- Fig. 1: einen Durchflussmengenregler in einem perspektivischen Teil-Längsschnitt, der ein Reglergehäuse mit zwei konzentrischen Ringkanälen hat, von denen in einem Regler-Ringkanal ein aus elastischem Material hergestellter und ringförmig ausgebildeter Drosselkörper vorgesehen ist, während ein demgegenüber außenliegend angeordneter und einem Einlaufventil zugeordneter Ventil-Ringkanal einen aus elastischem Material hergestellten und ebenfalls ringförmig ausgestalteten Ventilkörper in sich aufnimmt,
- Fig. 2: den Durchflussmengenregler aus Fig. 1 in einer perspektivischen und schräg geneigten Draufsicht auf die Zuströmseite,
- Fig. 3: den Durchflussmengenregler aus Fig. 1 und 2 in einer Draufsicht auf die Zuströmseite seines Reglergehäuses,
- Fig. 4: den Durchflussmengenregler aus den Fig. 1 bis 3 in einem Längsschnitt in Schnittebene IV-IV aus Fig. 3,
- Fig. 5: den Durchflussmengenregler aus den Fig. 1 bis 4 in einer Draufsicht auf seine Abströmseite,
- Fig. 6: den Durchflussmengenregler aus den Fig. 1 bis 5 in einer perspektivischen und schräg geneigten Draufsicht auf die Zuströmseite, wobei der im ReglerRingkanal angeordnete Drosselkörper und der im Ventil-Ringkanal vorgesehene Ventilkörper mit Hilfe eines hier kreuzförmig ausgebildeten Sicherungselementes gegen ein Aufschwimmen im Reglergehäuse gesichert sind, welches Sicherungselement an der Zuströmseite des Reglergehäuses lösbar verbindbar und vorzugsweise lösbar verrastbar gehalten ist,
- Fig. 7: die in Fig. 6 gezeigte Ausführung des Durchflussmengenreglers in einer Draufsicht auf seine Zuströmseite,
- Fig. 8: die Durchflussmengenregler-Ausführung gemäß den Fig. 6 und 7 in einem Längsschnitt in Schnittebene VIII-VIII aus Fig. 7,
- Fig. 9: die Durchflussmengenregler-Ausführung gemäß den Fig. 6 bis 8 in einer Draufsicht auf die Abströmseite des Reglergehäuses,
- Fig. 10: einen mit Fig. 1 bis 9 vergleichbar ausgestalteten Durchflussmengenregler in einem perspektivischen Teil-Längsschnitt, wobei der in einem Regler-Ringkanal angeordnete Drosselkörper zwischen sich und einer hier innenliegenden profilierten Kanalwandung einen Steuerspalt begrenzt,
- Fig. 11: den Durchflussmengenregler aus Fig. 10 in einer perspektivischen und leicht geneigten Draufsicht auf die Zuströmseite,
- Fig. 12: den Durchflussmengenregler aus Fig. 10 und 11 in einer Draufsicht auf die Zuströmseite,
- Fig. 13: den Durchflussmengenregler aus Fig. 10 bis 12 in einem Längsschnitt durch Schnittebene XIII-XIII aus Fig. 12,
- Fig. 14: den Durchflussmengenregler aus Fig. 10 bis 13 in einer Draufsicht auf die Abströmseite des Reglergehäuses, und
- Fig. 15: ein Leistungsdiagramm, das die Durchflussleistung der in den Fig. 1 bis 14 gezeigten Durchflussmengenregler in Abhängigkeit vom Druck des anströmenden Mediums veranschaulicht.

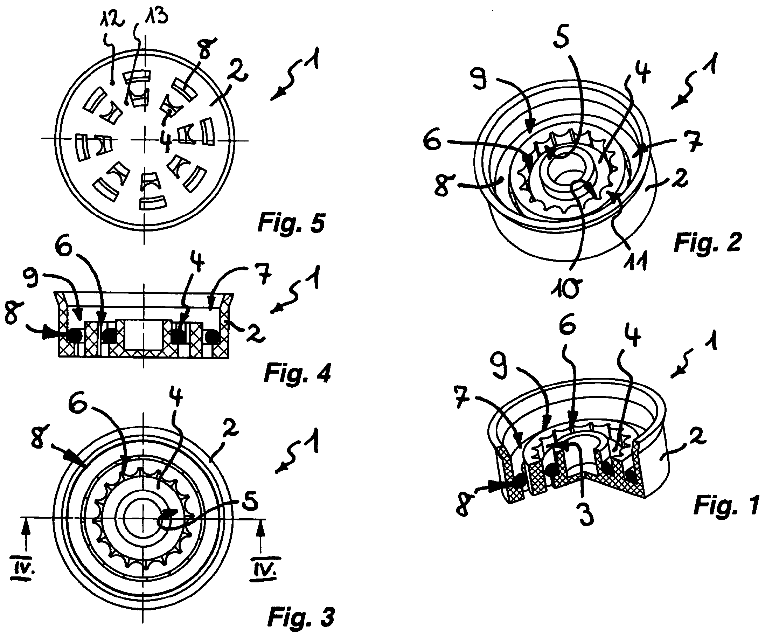

In den Fig. 1 bis 9 und 10 bis 14 sind verschiedene Ausführungen 1, 110 eines Durchflussmengenreglers dargestellt. Die Durchflussmengenregler 1, 110 weisen ein Reglergehäuse 2 auf, das in eine sanitäre Wasserleitung, beispielsweise in den Wasserauslauf einer sanitären Auslaufarmatur, einsetzbar ist. Das Reglergehäuse 2 der Durchflussmengenregler 1, 110 weist einen Regler-Ringkanal 3 auf, in dem ein ringförmiger Drosselkörper 4 aus elastischem Material vorgesehen ist. Der elastische Drosselkörper 4 begrenzt zwischen sich und einer, eine Regelprofilierung 5 tragenden Kanalwandung einen Steuerspalt 6, dessen Durchtrittsquerschnitt durch den sich unter der beim Durchströmen bildenden Druckdifferenz verformenden Drosselkörper 4 veränderbar ist. Mit zunehmendem Druck verformt sich der aus elastischem Material bestehende Drosselkörper 4 in die Regelprofilierung 5, so dass sich der Durchtrittsquerschnitt des Steuerspalts 6 zunehmend verengt, derart, dass die maximale Durchflussleistung druckunabhängig auf einen festgelegten Wert begrenzt ist.

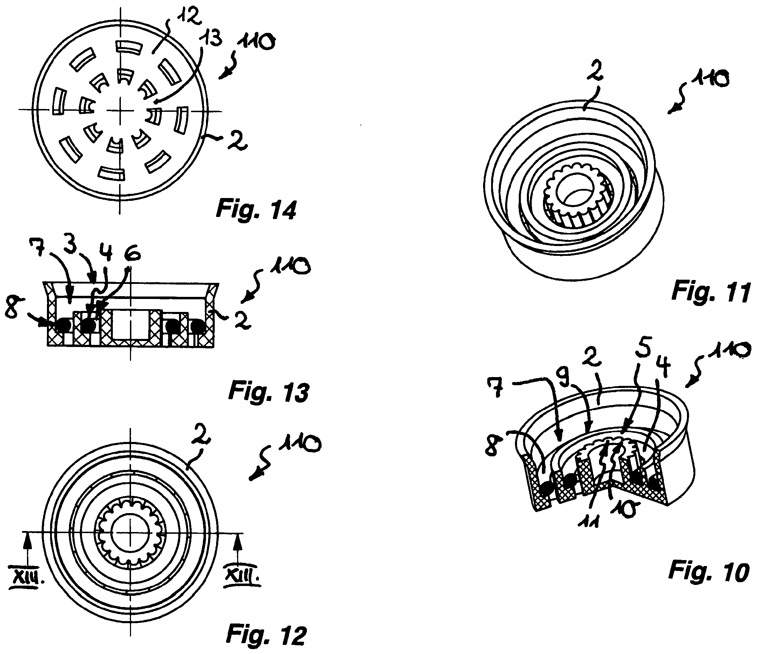

Während bei dem Durchflussmengenregler 1 gemäß den Fig. 1 bis 9 die die Regelprofilierung 5 tragende und den Steuerspalt 6 begrenzende Kanalwandung die äußere Kanalwandung des Regler-Ringkanals 3 ist, ist bei dem in Fig. 10 bis 14 gezeigten Durchflussmengenregler 110 die Regelprofilierung 5 an der inneren Kanalwandung vorgesehen. Da der zwischen Drosselkörper 4 und profilierter Kanalwandung vorgesehene Steuerspalt 6 des Durchflussmengenreglers 1 einen größeren lichten Öffnungsquerschnitt hat, ist dieser Durchflussmengenregler 1 bevorzugt für solche Anwendungen vorgesehen, die eine größere maximale Durchflussleistung erfordern.

Die Durchflussmengenregler 1, 110 weisen ein Ventil 7 auf, das einen Ventilkörper 8 hat, der sich unter dem Druck des durchströmenden Mediums von einer Offenstellung gegen eine Rückstellkraft in eine Schließstellung bewegt, in welcher Schließstellung der Ventilkörper 8 wenigstens eine Ventilöffnung verschließt.

Dabei ist der ringförmig ausgestaltete und aus elastischem Material hergestellte Ventilkörper 8 in einem Ventil-Ringkanal 9 des Reglergehäuses 2 vorgesehen. Der Ventil-Ringkanal 9 weist in seinem Kanalgrund wenigstens eine Ventilöffnung auf. Unter dem Druck des anströmenden Mediums kann sich der elastische Ventilkörper 8 derart verformen, dass der Ventilkörper 8 sich von der Offenstellung gegen die Rückstellkraft der Eigenelastizität des für ihn verwendeten elastischen Materials in die Schließstellung bewegt.

Das Ventil 7 hat die Aufgabe, bei niedrigem Anschlussdruck einen zusätzlichen Flüssigkeitsdurchgang zu schaffen, der bei zunehmend steigendem Druck des anströmenden Mediums ein rasches Ansteigen der Durchflussleistung bis zum angestrebten Maximalwert sicherstellt. Durch die ringförmige und an den Regler-Ringkanal 3 angepasste Formgebung des Ventil-Ringkanals 9 kann die zumindest eine Ventilöffnung des Ventils 7 einen vergleichsweise großen Öffnungsquerschnitt aufweisen. Der Ventilkörper 8 ist ringförmig ausgestaltet und kann aus elastischem Material kostengünstig hergestellt werden. Da der Ventilkörper 8 nicht beispielsweise in axialer Richtung verschieblich geführt werden muss, sondern sich unter dem Druck des anströmenden Mediums lediglich in radialer Richtung zu verformen hat, ist das Ventil 7 auch störunanfällig und wartungsarm. Da der Ventilkörper 8 nicht beispielsweise in axialer Richtung verschieblich geführt werden muss, und da durch die ringförmige und an den Regler-Ringkanal 3 angepasste Formgebung des Ventil-Ringkanals 9 die Ventilöffnung platzsparend und dennoch mit einer vergleichsweise großen lichten Öffnungsfläche ausgestaltet werden kann, können die hier dargestellten Durchflussmengenregler 1, 110 leistungsfähig und kompakt ausgestaltet werden.

Aus den Fig. 1 bis 14 ist erkennbar, dass der Ventil-Ringkanal 9 und der Regler-Ringkanal 3 konzentrisch zueinander in Bezug auf die Gehäuse-Längsachse des Reglergehäuses 2 angeordnet sind. Dabei ist der Ventil-Ringkanal 9 der Durchflussmengenregler 1, 110 in Bezug auf den Regler-Ringkanal 3 außenliegend angeordnet. Bei den Durchflussmengenregler-Ausführungen 1, 110 ist die Regelprofilierung 5 durch in Durchströmrichtung orientierte Einformungen 10 und Ausformungen 11 der Kanalwandung gebildet.

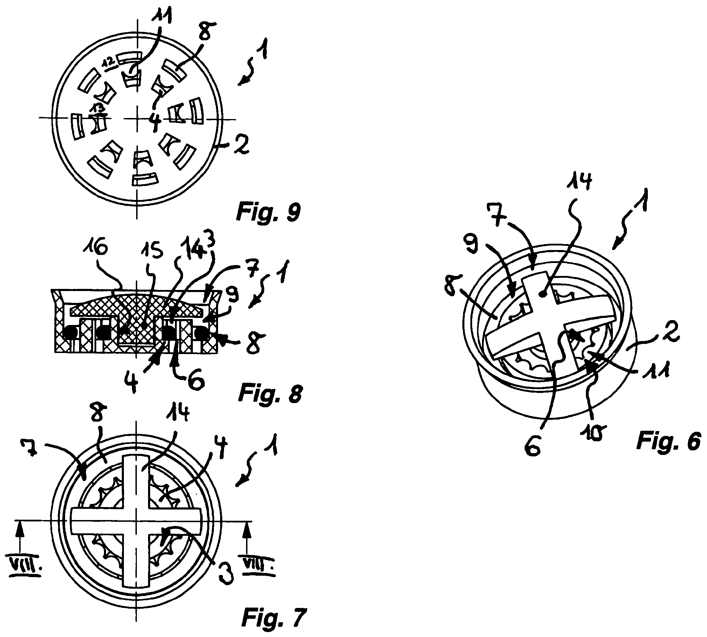

Damit sowohl der Drosselkörper 4 als auch der Ventilkörper 8 keinesfalls verloren gehen kann, ist es vorteilhaft, wenn der Drosselkörper 4 im Regler-Ringkanal 3 und der Ventilkörper 8 im Ventil-Ringkanal 9 beidseits in axialer Richtung gesichert ist. Aus den Draufsichten auf die Abströmseite der Durchflussmengenregler 1, 110 in den Fig. 5, 9 und 14 wird deutlich, dass die Ringkanäle 3, 9 jeweils eine, durch radiale Stege 12 bzw. 13 unterbrochene Ringöffnung bilden. Um den Drosselkörper 4 und den Ventilkörper 8 auch auf der Zuströmseite des Reglergehäuses 2 gegen ein unbeabsichtigtes Aufschwimmen zu sichern und um die Anordnung von Drosselkörper 4 und Ventilkörper 8 in den zugeordneten Ringkanälen 3, 9 sicherzustellen, ist ein hier in der Draufsicht kreuzförmiges Sicherungselement 14 vorgesehen, das auf der in einer Ebene angeordneten Zuströmseite des Reglergehäuses 2 anliegt und die Ringkanäle 3, 9 derart übergreift, dass Drosselkörper 4 und Ventilkörper 8 in den zugeordneten Ringkanälen 3, 9 niedergehalten werden. Aus dem Längsschnitt in Fig. 8 wird deutlich, dass das Sicherungselement 14 an der Zuströmseite des Reglergehäuses 2 lösbar verbindbar und vorzugsweise verrastbar gehalten ist. Das Sicherungselement 14 weist dazu einen vorstehenden Verbindungszapfen 15 auf, der in eine zentrale Verbindungsöffnung 16 auf der Zuströmseite des Reglergehäuses 2 lösbar einsetzbar ist.

Die hier dargestellten Durchflussmengenregler 1, 110 lassen sich derart platzsparend und kompakt ausgestalten, dass diese auch auf der Zuströmseite eines Strahlreglers lösbar befestigt werden können, ohne dessen Einbauhöhe derart zu beeinflussen, dass dieser Strahlregler nicht mehr ohne weiteres in den Wasserauslauf einer sanitären Auslaufarmatur eingesetzt werden könnte.

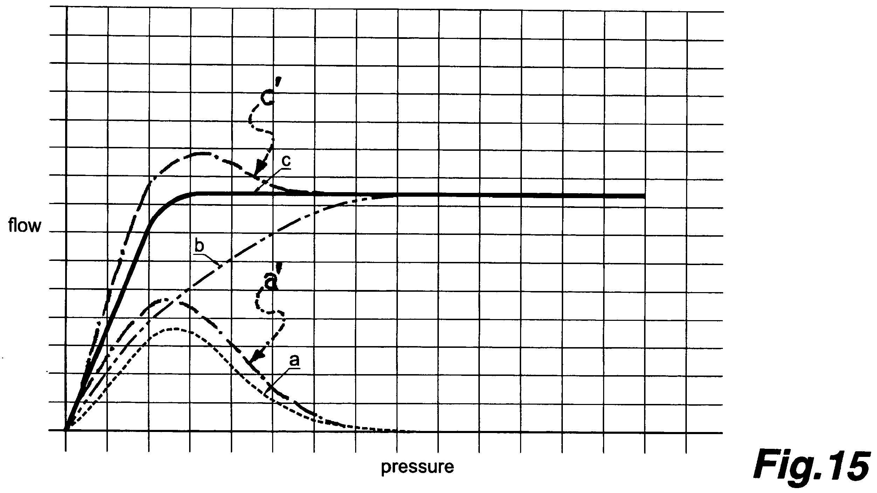

Aus dem Leistungsdiagramm in Fig. 15 wird deutlich, dass sich die hier gezeigten Durchflussmengenregler 1, 110 durch einen in Bezug auf den Druck des anströmenden Fluids optimierten Leistungsverlauf auszeichnen. Dabei zeigt das Bezugszeichen b das pro Zeiteinheit durchströmende Durchflussvolumen im Bereich des Regler-Ringkanals 3 in Abhängigkeit vom Druck des anströmenden Fluids. Der mit dem Bezugszeichen a gekennzeichnete Kurvenverlauf zeigt demgegenüber das zusätzliche Volumen, das durch das Ventil 7 durchströmen kann; dabei wird auch deutlich, dass ab einem bestimmten Druck des anströmenden Fluids der elastische Ventilkörper 8 die zumindest eine Ventilöffnung des Ventils 7 dicht verschließt, so dass ab diesem Druck kein weiteres, durch das Ventil 7 durchströmendes Fluid-Volumen zu erwarten ist. Die Kurvenverläufe a und b addieren sich zu der nun optimierten und mit dem Bezugszeichen c gekennzeichneten Leistungskurve der Durchflussmengenregler 1, 110, die nämlich bereits bei vergleichsweise geringen Drücken des anströmenden Fluids den angestrebten Maximalwert der Durchflussleistung erreichen können.

Es ist durchaus möglich, dass der Kurvenverlauf a', der das durch das Ventil 7 durchströmende zusätzliche Volumen zeigt, steiler ansteigt, als der Kurvenverlauf b des pro Zeiteinheit durchströmenden Durchflussvolumens im Bereich des Regler-Ringkanals 3, was in einer noch steileren Kurve c' und in einer im Niederdruckbereich überschwingenden Kurvenform resultiert, die jedoch nach Verschließen des Ventilkanals und Abfall der Kurve a' wieder auf die angestrebte maximale Durchflussleistung des Durchflussmengenreglers selbst bei steigenden Drücken absinkt. Um den Kurvenverlauf im Niederdruckbereich derart zunächst auch über die maximale Durchflussleistung des Durchflussmengenreglers hinaus ansteigen zu lassen, kann das Ventil 7 beispielsweise durch einen entsprechend großen lichten Querschnitt seiner Ventilöffnung entsprechend ausgestaltet sein.

### Bezugszeichenliste:

- 1: Durchflussmengenregler (gemäß den Fig. 1 bis 9)
- 110: Durchflussmengenregler (gemäß den Fig. 10 bis 14)
- 2: Reglergehäuse
- 3: Regler-Ringkanal
- 4: Drosselkörper
- 5: Regelprofilierung
- 6: Steuerspalt
- 7: Ventil
- 8: Ventilkörper
- 9: Ventil-Ringkanal
- 10: Einformung (der Regelprofilierung 5)
- 11: Ausformung (der Regelprofilierung 5)
- 12: Stege (im Bereich des Regler-Ringkanals 3)
- 13: Stege (im Bereich des Ventil-Ringkanals 9)
- 14: Sicherungselement
- 15: Verbindungszapfen (des Sicherungselements 14)
- 16: Verbindungsöffnung (des Reglergehäuses 2)

## Patentansprüche

1. Durchflussmengenregler (1, 110) mit einem Reglergehäuse (2), das (2) zumindest einen Regler-Ringkanal (3) aufweist, in dem (3) ein ringförmiger Drosselkörper (4) aus elastischem Material vorgesehen ist, der (4) zwischen sich und einer, eine Regelprofilierung (5) tragenden Kanalwandung einen Steuerspalt (6) begrenzt, dessen (6) Durchtrittsquerschnitt durch den sich unter der beim Durchströmen bildenden Druckdifferenz verformenden Drosselkörper (4) veränderbar ist, sowie mit zumindest einem Ventil (7), das einen Ventilkörper (8) hat, der (8) sich unter dem Druck des durchströmenden Mediums von einer Offenstellung gegen eine Rückstellkraft in eine Schließstellung bewegt, in welcher Schließstellung der Ventil-Körper (8) wenigstens eine Ventilöffnung verschließt, **dadurch gekennzeichnet, dass** der Ventilkörper (8) in einem Ventil-Ringkanal (9) des Reglergehäuses (2) vorgesehen ist, welcher Ventil-Ringkanal (9) im Bereich seines Kanalgrundes wenigstens eine Ventilöffnung aufweist, dass der Ventilkörper (8) ringförmig ausgestaltet und aus elastischem Material hergestellt ist, dass der ringförmige Ventilkörper (8) sich unter dem Druck des durchströmenden Mediums derart verformt, dass der Ventilkörper (8) sich von der Offenstellung gegen die Rückstellkraft der Eigenelastizität des für den Ventilkörper (8) verwendeten elastischen Materials in die Schließstellung bewegt, in welcher der elastische Ventilkörper (8) die wenigstens eine Ventilöffnung dicht verschließt, so dass ab einem bestimmten Druck des anströmenden Fluids kein weiteres, durch das Ventil (7) durchströmendes Fluid-Volumen zu erwarten ist, und dass sich der in Abhängigkeit vom Druck des anströmenden Fluids dargestellte Kurvenverlauf (b) des pro Zeiteinheit durch den zumindest einen Regler-Ringkanal (3) durchströmenden Durchflussvolumens und der Kurvenverlauf (a) des durch die wenigstens eine Ventilöffnung strömenden zusätzlichen Volumens somit derart addieren, dass der Durchflussmengenregler (1, 110) bereits bei geringen Drücken des anströmenden Fluids seinen angestrebten Maximalwert der Durchflussleistung erreicht und einhält.

2. Durchflussmengenregler nach Anspruch 1, **dadurch gekennzeichnet, dass** der zumindest eine Ventil-Ringkanal (9) und der wenigstens eine Regler-Ringkanal (3) konzentrisch zueinander angeordnet sind.

3. Durchflussmengenregler nach Anspruch 1 oder 2, **dadurch gekennzeichnet, dass** zumindest ein Ventil-Ringkanal (9) in Bezug auf einen Regler-Ringkanal (3) außenliegend angeordnet ist.

4. Durchflussmengenregler nach einem der Ansprüche 1 bis 3, **dadurch gekennzeichnet, dass** die Regelprofilierung (5) durch vorzugsweise in Durchströmrichtung orientierte Ein- und Ausformungen (10, 11) der Kanalwandung gebildet ist.

5. Durchflussmengenregler nach einem der Ansprüche 1 bis 4, **dadurch gekennzeichnet, dass** die Regelprofilierung (5) an einer inneren und/oder vorzugsweise einer äußeren Kanalwandung des zumindest einen Regler-Ringkanals (3) vorgesehen ist.

6. Durchflussmengenregler nach einem der Ansprüche 1 bis 5, **dadurch gekennzeichnet, dass** der Drosselkörper (4) im Regler-Ringkanal (3) und/oder der Ventilkörper (8) im Ventil-Ringkanal (9) vorzugsweise beidseits in axialer Richtung gesichert ist.

7. Durchflussmengenregler nach Anspruch 6, **dadurch gekennzeichnet, dass** die als Einsetzöffnung für Drossel- bzw. Ventilkörper (4, 8) dienende Zuströmseite von Regler-Ringkanal (3) und/oder Ventil-Ringkanal (9) mittels wenigstens einem vorzugsweise kreuzförmigen Sicherungselementes 14 sicherbar ist.

8. Durchflussmengenregler nach Anspruch 7, **dadurch gekennzeichnet, dass** das wenigstens eine Sicherungselement 14 am Reglergehäuse (2) lösbar und vorzugsweise lösbar verrastbar gehalten ist.

## Claims

1. Flow rate regulator (1, 110) having a regulator housing (2) that (2) has at least one regulator annular duct (3) in which (3) there is provided an annular throttle body (4) composed of elastic material, which throttle body (4) delimits a control gap (6) between itself and a duct wall which bears a regulating profiling (5), the passage cross section of which control gap (6) can be varied by the throttle body (4) that deforms under the pressure difference that is generated as flow passes through, and having at least one valve (7) that has a valve body (8) which (8), under the pressure of the medium flowing through, moves from an open position into a closed position counter to a restoring force, in which closed position the valve body (8) closes off at least one valve opening, **characterized in that** the valve body (8) is provided in a valve annular duct (9) of the regulator housing (2), which valve annular duct (9) has at least one valve opening in the region of its duct base, **in that** the valve body (8) is of annular configuration and is produced from elastic material, **in that** the annular valve body (8) deforms under the pressure of the medium flowing through such that the valve body (8) moves from the open position into the closed position counter to the restoring force of the inherent elasticity of the elastic material used for the valve body (8), in which closed position the elastic valve body (8) sealingly closes the at least one valve opening, such that, above a certain pressure of the inflowing fluid, no further fluid volume flowing through the valve (7) is to be expected, and **in that** the curve profile (b), plotted as a function of the pressure of the inflowing fluid, of the throughflow volume flowing through the at least one regulator annular duct (3) per unit of time and the curve profile (a) of the additional volume flowing through the at least one valve opening are added together such that the flow rate regulator (1, 110) attains and maintains its desired maximum value of the throughflow rate already in the presence of low pressures of the inflowing fluid.

2. Flow rate regulator according to Claim 1, **characterized in that** the at least one valve annular duct (9) and the at least one regulator annular duct (3) are arranged concentrically with respect to one another.

3. Flow rate regulator according to Claim 1 or 2, **characterized in that** at least one valve annular duct (9) is arranged to the outside of a regulator annular duct (3).

4. Flow rate regulator according to one of Claims 1 to 3, **characterized in that** the regulating profiling (5) is formed by recessed portions and protruding portions (10, 11), oriented preferably in the throughflow direction, of the duct wall.

5. Flow rate regulator according to one of Claims 1 to 4, **characterized in that** the regulating profiling (5) is provided on an inner and/or preferably an outer duct wall of the at least one regulator annular duct (3).

6. Flow rate regulator according to one of Claims 1 to 5, **characterized in that** the throttle body (4) in the regulator annular duct (3) and/or the valve body (8) in the valve annular duct (9) are/is secured preferably at both sides in the axial direction.

7. Flow rate regulator according to Claim 6, **characterized in that** the inflow side, which serves as an insertion opening for the throttle and valve bodies (4, 8), of the regulator annular duct (3) and/or valve annular duct (9) can be secured by means of at least one preferably cross-shaped securing element (14).

8. Flow rate regulator according to Claim 7, **characterized in that** the at least one securing element (14) is held in a releasable and preferably releasably lockable manner on the regulator housing (2).

## Revendications

1. Régulateur de débit (1, 110) avec un boîtier de régulateur (2), qui (2) présente au moins un canal annulaire de régulateur (3), dans lequel (3) il est prévu un corps d'étranglement annulaire (4) en matériau élastique, qui (4) limite une fente de commande (6) entre lui-même et une paroi de canal portant un profilage de régulation (5), dont (6) la section transversale de passage peut être modifiée par le corps d'étranglement (4) se déformant sous l'effet de la différence de pression qui se forme lors de l'écoulement, ainsi qu'avec au moins une soupape (7), qui comporte un corps de soupape (8), qui (8) se déplace sous la pression du fluide en écoulement d'une position d'ouverture contre une force de rappel à une position de fermeture, position de fermeture dans laquelle le corps de soupape (8) ferme au moins une ouverture de soupape, **caractérisé en ce que** le corps de soupape (8) est prévu dans un canal annulaire de soupape (9) du boîtier de régulateur (2), canal annulaire de soupape (9) qui présente dans la région de son fond de canal au moins une ouverture de soupape, **en ce que** le corps de soupape (8) est de forme annulaire et est fabriqué en matériau élastique, **en ce que** le corps de soupape annulaire (8) se déforme sous la pression du fluide en écoulement, de telle manière que le corps de soupape (8) se déplace de la position d'ouverture contre la force de rappel due à l'élasticité propre du matériau élastique utilisé pour le corps de soupape (8) jusqu'à la position de fermeture, dans laquelle le corps de soupape élastique (8) ferme de façon étanche ladite au moins une ouverture de soupape, de telle manière qu'à partir d'une pression déterminée du fluide entrant on ne puisse plus attendre de volume de fluide traversant la soupape (7), et **en ce que** l'allure de la courbe (b) du débit volumique circulant à travers ledit au moins un canal annulaire de régulateur (3) par unité de temps représentée en fonction de la pression du fluide entrant et que l'allure de la courbe (a) du volume additionnel s'écoulant à travers ladite au moins une ouverture de soupape s'additionnent ainsi de telle manière que le régulateur de débit (1, 110) atteigne et respecte, déjà pour de faibles pressions du fluide entrant, sa valeur maximale visée de la capacité de débit.

2. Régulateur de débit selon la revendication 1, **caractérisé en ce que** ledit au moins un canal annulaire de soupape (9) et ledit au moins un canal annulaire de régulateur (3) sont disposés de façon concentrique l'un par rapport à l'autre.

3. Régulateur de débit selon la revendication 1 ou 2, **caractérisé en ce qu'**au moins un canal annulaire de soupape (9) est disposé à l'extérieur par rapport à un canal annulaire de régulateur (3).

4. Régulateur de débit selon l'une quelconque des revendications 1 à 3, **caractérisé en ce que** le profilage de régulation (5) est formé par des creux et des renflements (10, 11) de la paroi de canal orientés de préférence dans la direction de l'écoulement.

5. Régulateur de débit selon l'une quelconque des revendications 1 à 4, **caractérisé en ce que** le profilage de régulation (5) est prévu sur une paroi de canal intérieure et/ou de préférence extérieure dudit au moins un canal annulaire de régulateur (3).

6. Régulateur de débit selon l'une quelconque des revendications 1 à 5, **caractérisé en ce que** le corps d'étranglement (4) est bloqué dans le canal annulaire de régulateur (3) et/ou le corps de soupape (8) est bloqué dans le canal annulaire de soupape (9) de préférence de part et d'autre en direction axiale.

7. Régulateur de débit selon la revendication 6, **caractérisé en ce que** le côté amont du canal annulaire de régulateur (3) et/ou du canal annulaire de soupape (9) servant d'ouverture d'insertion pour le corps d'étranglement ou le corps de soupape (4, 8) peut être bloqué au moyen d'au moins un élément de blocage (14) de préférence en forme de croix.

8. Régulateur de débit selon la revendication 7, **caractérisé en ce que** ledit au moins un élément de blocage (14) est maintenu de façon séparable et de préférence de façon séparable par encliquetage sur le boîtier de régulateur (2).
